# EUROPEAN PATENT SPECIFICATION

(11) **EP 3 285 505 B1**
(45) Date of publication and mention of the grant of the patent: **25.10.2023**
(21) Application number: 17182191.1
(22) Date of filing: 19.07.2017
(51) Int. Cl.: H04W 4/00, H04L 12/28

(54) **DEVICE MARKING METHOD AND APPARATUS AND RECORDING MEDIUM**
VORRICHTUNGSMARKIERUNGSVERFAHREN SOWIE VORRICHTUNG UND AUFZEICHNUNGSMEDIUM
PROCÉDÉ ET APPAREIL DE MARQUAGE DE DISPOSITIF ET SUPPORT D'ENREGISTREMENT

(30) Priority: 16.08.2016 CN 201610678079
(43) Date of publication of application: 21.02.2018
(73) Proprietor: Beijing Xiaomi Mobile Software Co., Ltd., Beijing 100085 (CN)
(72) Inventor: JIA, Weiguang, Beijing, Beijing 100085 (CN); SUN, Yongli, Beijing, Beijing 100085 (CN); HOU, Enxing, Beijing, Beijing 100085 (CN)
(74) Representative: dompatent von Kreisler Selting Werner - Partnerschaft von Patent- und Rechtsanwälten mbB

(56) References cited:
- EP-A1- 3 041 280
- CN-A- 105 162 728
- US-A1- 2015 205 465
- US-A1- 2016 124 590

## Description

### TECHNICAL FIELD

The present invention is related to the technical field of communications, and more particularly to a device marking method and apparatus, a computer program and a recording medium.

### BACKGROUND

In related art, a smart device can be added to its connected gateway device by utilizing a wireless communications technology. Further, a user can log into a corresponding device managing application (APP) by using a terminal bound with the gateway device in advance. Information on at least one smart device that has been added to a device list of the gateway device or the terminal is displayed by the device managing APP, and the user can remotely control all displayed smart devices by using the terminal.

However, when a plurality of smart devices are added to the gateway device during the same time period, the user may not be able to correlate the physical smart devices with their respective visual representations in the device list displayed on the terminal in one-to-one correspondence, thus making it inconvenient for the user to control the smart devices by using the terminal later.

Document CN105162728A related to controlling which devices are permitted to connect to a network is considered relevant prior art.

### SUMMARY

In view of the foregoing, the present invention provides a device marking method and apparatus and a recording medium to remedy the deficiency in the related art.

According to a first aspect of the present invention, there is provided a method according to claim 1 for use in a target smart device, the method comprising: acquiring a device identification of the target smart device, when a preset physical button is triggered; and sending a marking request carrying the device identification to a gateway device to which the target smart device connects, so that the gateway device forwards the marking request to a terminal bound with the gateway device in advance, wherein the marking request requests the terminal to mark the target smart device in a device list currently displayed, and the device list contains information of at least one smart device added into a device list of a target device.

Further, after marking the target smart device in the device list currently displayed, the method further comprises: stopping marking the target smart device, when the target smart device has been marked for a preset time length.

Optionally, the target device is the gateway device or the terminal.

According to a second aspect of the invention, there is provided a device marking method according to claim 2 for use in a terminal, the method comprising: receiving a marking request forwarded by a gateway device having the terminal bound therewith in advance; and marking a target smart device in a device list currently displayed, according to the marking request, wherein the marking request requests the terminal to mark the target smart device in the device list and the marking request carries a device identification of the target smart device, and the device list contains information of at least one smart device added into a device list of a target device.

Further, after marking the target smart device in the device list currently displayed, the method further comprises: stopping marking the target smart device, when the target smart device has been marked for a preset time length.

Optionally, marking the target smart device in the device list currently displayed comprises: in the device list currently displayed, displaying the target smart device in a first display manner and displaying another smart device added to the target device other than the target smart device in a second display manner, the first display manner being different from the second display manner.

Optionally, marking the target smart device in the device list currently displayed comprises: adding a preset label at a location of the target smart device in the device list currently displayed.

Optionally, stopping marking the target smart device comprises: displaying all smart devices in the device list in a third display manner; or cancelling display of the preset label.

According to a third aspect of the invention, there is provided a device marking apparatus for use in a target smart device, the apparatus comprising: an acquiring module configured to acquire a device identification of the target smart device, when a preset physical button is triggered; and a sending module configured to send a marking request carrying the device identification to a gateway device to which the target smart device connects, so that the gateway device forwards the marking request to a terminal bound with the gateway device in advance, wherein the marking request requests the terminal to mark the target smart device in a device list currently displayed, and the device list contains information of at least one smart device added into a device list of a target device.

Further, the apparatus further comprises: an executing module configured to stop marking the target smart device, when the target smart device has been marked for a preset time length.

Optionally, the target device is the gateway device or the terminal.

According to a fourth aspect of the invention, there is provided a device marking apparatus for use in a terminal, the apparatus comprising: a receiving module configured to receive a marking request forwarded by a gateway device having the terminal bound therewith in advance; and a marking module configured to mark a target smart device in a device list currently displayed, according to the marking request, wherein the marking request requests the terminal to mark the target smart device in the device list and the marking request carries a device identification of the target smart device, and the device list contains information of at least one smart device added into a device list of a target device.

Further, the apparatus further comprises: an executing module configured to stop marking the target smart device, when the target smart device has been marked for a preset time length.

Optionally, the marking module comprises: a first marking sub-module configured to, in the device list currently displayed, display the target smart device in a first display manner and display another smart device added to the target device other than the target smart device in a second display manner, the first display manner being different from the second display manner.

Optionally, the marking module comprises: a second marking sub-module configured to add a preset label at a location of the target smart device in the device list currently displayed.

Optionally, the executing module comprises: a displaying sub-module configured to display all smart devices in the device list in a third display manner; or a display cancelling sub-module configured to cancel display of the preset label.

According to a fifth aspect of the invention, there is provided a device marking apparatus for use in a target smart device, the apparatus comprising: a processor; and a memory storing instructions executable by the processor. The processor is configured to: acquire a device identification of the target smart device, when a preset physical button is triggered; and send a marking request carrying the device identification to a gateway device to which the target smart device connects, so that the gateway device forwards the marking request to a terminal bound with the gateway device in advance, wherein the marking request requests the terminal to mark the target smart device in a device list currently displayed, and the device list contains information of at least one smart device added into a device list of a target device.

According to a sixth aspect of the invention, there is provided a device marking apparatus for use in a terminal, the apparatus comprising: a processor; and a memory storing instructions executable by the processor. The processor is configured to: receive a marking request forwarded by a gateway device having the terminal bound therewith in advance; and mark a target smart device in a device list currently displayed, according to the marking request, wherein the marking request requests the terminal to mark the target smart device in the device list and the marking request carries a device identification of the target smart device, and the device list contains information of at least one smart device added into a device list of a target device.

In one particular embodiment, the steps of the device marking method for use in a terminal are determined by computer program instructions.

Consequently, according to a seventh aspect, the invention is also directed to a computer program for executing the steps of the device marking method for use in a terminal as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions according to the embodiments of this invention may have the following advantageous effects. In the embodiments of the invention, when there are a plurality of smart devices added to a target device which may be a terminal or a gateway device during the same time period, a user may trigger a preset physical button on a target smart device. Then, the terminal automatically marks the target smart device in a device list currently displayed, so that the user can correlate the physical target smart device with its visual representation in the device list displayed by the terminal, thereby making it easier for the user to remotely control the corresponding smart device in the device list by using the terminal later, improving intelligence of the terminal and bringing convenience to the user.

In an embodiment of the invention, when the target smart device is marked in the device list displayed by the terminal, the target smart device and other smart devices added to the target device than the target smart device may be displayed in different display manners, or a preset label may be added at a location of the target smart device in the device list currently displayed. This process enables the user to quickly identify the target smart device in the device list, and is easy to implement and practical to use.

In an embodiment of the invention, after the target smart device is marked in the device list, the terminal may stop marking the target smart deice when the target smart device has been marked for a preset time length. Optionally, all smart devices in the device list may be displayed in the same display manner, or display of the preset label may be cancelled. This process avoids the problem that a user cannot correlate a physical target smart device with its visual representation in the device list caused by marking a plurality of target smart devices in the device list after the user triggers preset physical buttons on other target smart devices, thereby improving the user experience.

It should be understood that both the foregoing general description and the following detailed description are exemplary and explanatory only and are not restrictive of the invention. The invention is defined by the appended claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Figs. 1A to 1D are schematic diagrams of scenarios for device marking according to an exemplary embodiment of the present invention;
Fig. 2 is a flowchart of a device marking method according to an exemplary embodiment of the present invention;
Figs. 3A to 3B are schematic diagrams of scenarios for device marking according to an exemplary embodiment of the present invention;
Fig. 4 is a flowchart of another device marking method according to an exemplary embodiment of the present invention;
Fig. 5 is a flowchart of yet another device marking method according to an exemplary embodiment of the present invention;
Fig. 6 is a schematic diagram of a scenario for device marking according to an exemplary embodiment of the present invention;
Fig. 7 is a flowchart of still another device marking method according to an exemplary embodiment of the present invention;
Fig. 8 is a flowchart of a further device marking method according to an exemplary embodiment of the present invention;
Fig. 9 is a schematic diagram of a scenario for device marking according to an exemplary embodiment of the present invention;
Figs. 10A to 10B are schematic diagrams of scenarios for device marking according to an exemplary embodiment of the present invention;
Fig. 10C is a flowchart of yet a further device marking method according to an exemplary embodiment of the present invention;
Figs. 10D to 10E are schematic diagrams of scenarios for device marking according to an exemplary embodiment of the present invention;
Fig. 11 is a block diagram of a device marking apparatus according to an exemplary embodiment of the present invention;
Fig. 12 is a block diagram of another device marking apparatus according to an exemplary embodiment of the present invention;
Fig. 13 is a block diagram of yet another device marking apparatus according to an exemplary embodiment of the present invention;
Fig. 14 is a block diagram of still another device marking apparatus according to an exemplary embodiment of the present invention;
Fig. 15 is a block diagram of a further device marking apparatus according to an exemplary embodiment of the present invention;
Fig. 16 is a block diagram of yet a further device marking apparatus according to an exemplary embodiment of the present invention;
Fig. 17 is a schematic structural diagram of a device marking apparatus according to an exemplary embodiment of the present invention;
Fig. 18 is a schematic structural diagram of another device marking apparatus according to an exemplary embodiment of the present invention;
Fig. 19 is a schematic structural diagram of a device marking system according to an exemplary embodiment of the present invention;
Fig. 20 is a schematic structural diagram of another device marking system according to an exemplary embodiment of the present invention.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise indicated. The implementations set forth in the following description of embodiments do not represent all implementations consistent with the invention. Instead, they are merely examples of apparatuses and methods consistent with aspects related to the invention as recited in the appended claims.

The terms used herein are for the purpose of illustrating the embodiments only, rather than limiting the present invention. The terms "a", "said" and "the" of singular forms used in the present description and the attached claims are also intended to include their plural forms, unless otherwise clearly specified in the context. It can also be appreciated that the term "and/or" as used herein refers to any or all possible combinations of one or more associated items as listed.

It can be appreciated that, while the terms "first", "second", "third" and so on may be used herein to describe various information, such information is not limited to these terms, which are only used to distinguish between different information of the same category. For example, the first information can also be referred to as the second information, and similarly the second information can also be referred to as the first information, without departing from the scope of the present invention. Depending on the context, the term "if' as used herein can be interpreted as "when", "while", or "in response to determining".

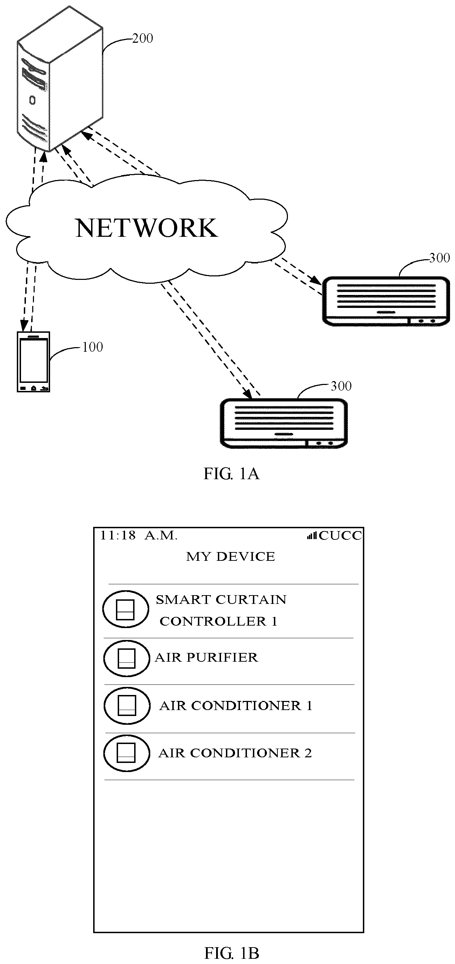

Before describing device marking methods provided by embodiments of the invention, scenarios for applying the embodiments of the invention will be described. As shown in Fig. 1A, a gateway device 200 has a terminal 100 bound therewith in advance. The gateway device 200 enables the function of allowing a smart device 300 to automatically access. The smart device 300 may regularly scan for a gateway device. When the gateway device 200 is found, the smart device 300 may access the gateway device 200 in a wireless connection manner, such as Wireless Fidelity (WIFI), Bluetooth or Zigbee, according to the related art. Optionally, the smart device is provided with an indicating function, and is a smart temperature/humidity sensor, a smart air conditioner, a smart water heater or the like.

A user may log into a pre-installed device managing APP to check and control all smart devices 300 added to a target device, which is the terminal 100 or the gateway device 200, according to the related art. The device managing APP may display a device list on the terminal 100 according to the related art. The device list includes information on at least one smart device added into a device list of the target device, as shown in Fig. 1B.

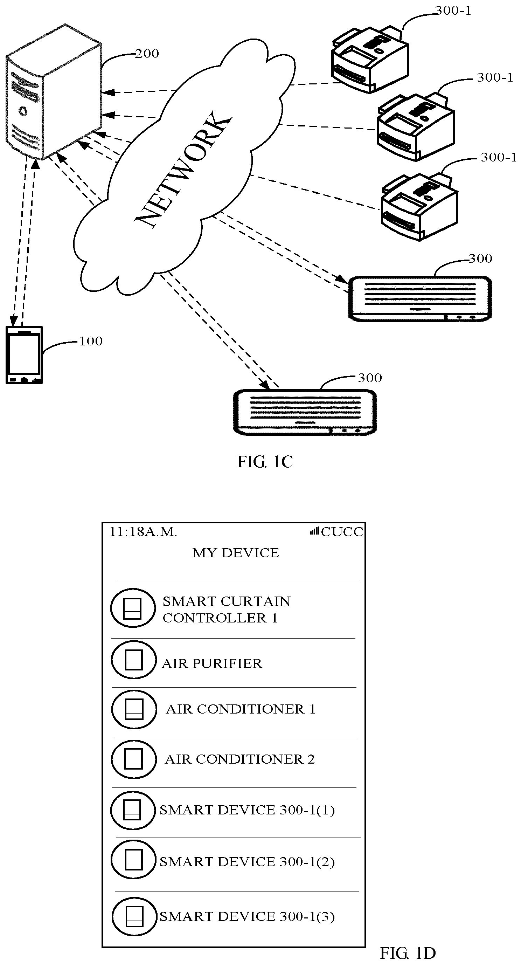

When a smart device 300-1 is newly added to the gateway device 200, the user may determine the newly added smart device 300-1 by refreshing the device list. When a plurality of smart devices 300-1 are newly added during the same time period as shown in Fig. 1C, the plurality of smart devices 300-1 will appear in the refreshed device list as shown in Fig. 1D.

In this case, the user perhaps cannot correlate the physical smart device 300-1 with its visual representation in the device list displayed on the terminal 100. To address this problem, device marking methods according to embodiments of the invention are provided, which make it easier for the user to correlate the physical smart device 300-1 with its visual representation in the device list displayed on the terminal.

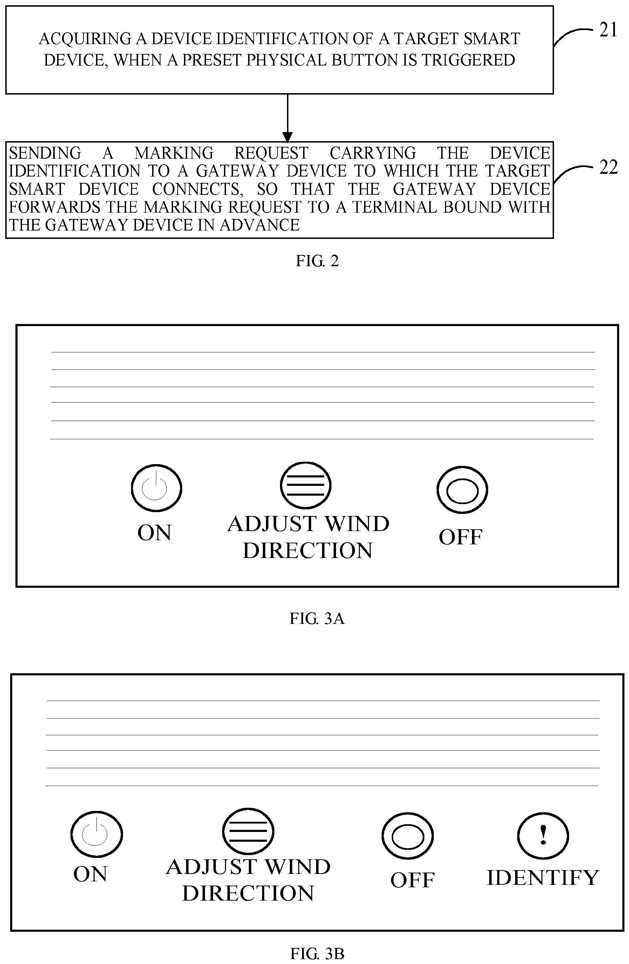

A device marking method provided by an embodiment of the invention may be used in a target smart device. Optionally, the target smart device is provided with an indicating function, and is a smart temperature/humidity sensor, a smart air conditioner, a smart water heater or the like. Fig. 2 illustrates the device marking method according to the exemplary embodiment. As shown, the method comprises the following steps:

In step 21, a device identification of the target smart device is acquired, when a preset physical button is triggered.

In the embodiment of the invention, the preset physical button may be provided on the target smart device for identifying the target smart device. Optionally, the preset physical button may be a newly added physical button dedicated for identifying the target smart device itself or may be an existing button on the target smart device which is reused as the preset physical button.

Take a smart air conditioner as an example, as shown in Fig. 3A. A newly added preset physical button may be provided, as shown in Fig. 3B. Alternatively, an existing button such as a power-on button may be reused. When the user presses the power-on button for a time length longer than a preset time length, the smart air conditioner determines that the user triggers the preset physical button for identifying the smart air conditioner itself.

In this step, considering that a user's help is required when the target smart device accesses a gateway device for the first time, the user typically needs to correlate the target smart device with its representation displayed in the device list, when the target smart device is found in the device list for the first time. Therefore, it is practical to detect whether the preset physical button for identifying the target smart device is triggered according to the related art, only when the target smart device accesses the gateway device for the first time.

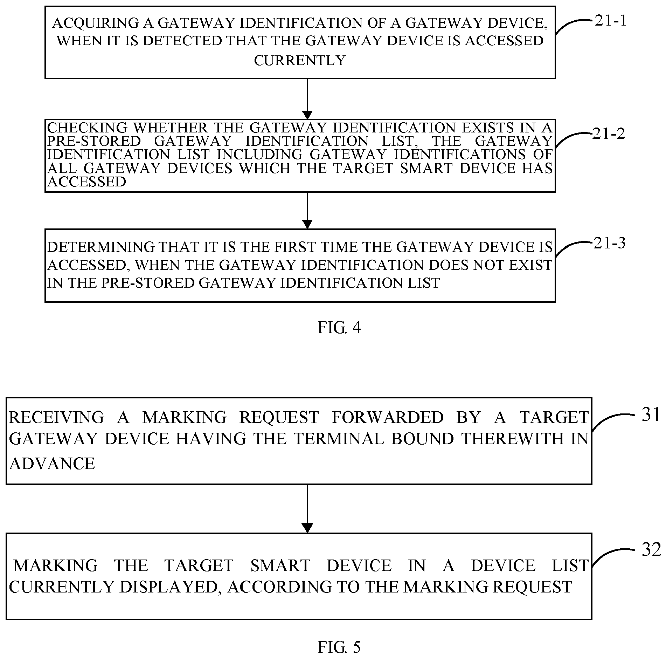

Optionally, for detecting whether it is the first time the gateway device is accessed, another device marking method is provided as shown in Fig. 4. The method shown in Fig. 4 is based on the embodiment shown in Fig. 2 and comprises the following steps.

In step 21-1, when it is detected that the gateway device is accessed currently, a gateway identification of the gateway device is acquired.

In this step, the gateway device has enabled the function of allowing automatic accessing, and the target smart device may scan for a gateway device according to the related art. When the gateway device is found, the gateway device is automatically accessed in a wireless connection manner, such as WIFI, Bluetooth or Zigbee.

Further, the target smart device may acquire the gateway identification of the gateway device through the wireless connection with the gateway device according to the related art. Optionally, the gateway identification may be information which can identify the gateway device, such as a Medium Access Control (MAC) address of the gateway device.

In step 21-2, it is checked whether the gateway identification exists in a pre-stored gateway identification list. The gateway identification list includes gateway identifications of all gateway devices which the target smart device has accessed.

In the embodiment of the invention, the target smart device may record, in the gateway identification list, gateway identifications of all gateway devices that have been accessed. In this step, after the terminal accesses the gateway device and acquires the gateway identification of the gateway device, it may check whether the gateway identification exists in the pre-stored gateway identification list according to the related art.

In step 21-3, when the gateway identification does not exist in the pre-stored gateway identification list, it is determined that it is the first time the gateway device is accessed.

In this step, if the gateway identification does not exist in the gateway identification list, it is determined that it is the first time the gateway device is accessed. Otherwise, it is determined that it is not the first time the gateway device is accessed.

In the embodiment of the invention, when determining that it is the first time the gateway device is accessed, the target smart device automatically detects whether the preset physical button is triggered according to the related art.

When determining that the preset physical button is triggered, the target smart device may acquire its own device identification according to the related art. Optionally, the device identification may be information which can identify the target smart device, such as a factory serial number of the target smart device.

In step 22, a marking request carrying the device identification is sent to a gateway device to which the target smart device connects, so that the gateway device forwards the marking request to a terminal bound with the gateway device in advance.

The marking request requests the terminal to mark the target smart device in a device list currently displayed, and the device list contains information on at least one smart device added into a device list of a target device. The target device is the terminal or the gateway device. As long as it has been added to the target device, the smart device added to the target device may be online or powered on or may be offline or not powered on.

When the target device is the terminal, the device list includes smart devices added to the terminal in a wired or wireless connection manner. Optionally, the wired connection manner may be via a data line or the like, and the wireless connection manner may include WIFI, Bluetooth, Zigbee or the like.

For example, when the target device is the terminal and there are a plurality of Bluetooth earphones added to the terminal via Bluetooth connections, then the device list includes the plurality of Bluetooth earphones.

When the target device is the gateway device, the device list may include a plurality of smart devices added to the gateway device. Optionally, the smart devices may be those added to the gateway device in a smart home. For example, when there are a plurality of smart air conditioners in the smart home and the smart air conditioners have been added to the gateway device, then the device list may include the smart air conditioners.

In this step, the terminal smart device automatically generates the marking request according to the related art, and sends the marking request carrying the device identification to the gateway device through the wireless connection previously established with the gateway device.

In the embodiment of the invention, after the gateway device receives the marking request through the wireless connection established with the target smart device, it directly forwards the marking request to the terminal bound with the gateway device in advance according to the related art. Then, the terminal marks the target smart device in the device list according to the marking request in the manner described hereinafter.

In the embodiment of the invention, when needing to correlate the physical target smart device with its visual representation in the device list currently displayed by the terminal, the user may trigger the preset physical button on the target smart device. The target smart device automatically sends the marking request to the gateway device and the gateway device forwards the marking request to the terminal, so that the target smart device is marked in the device list on the terminal, thereby improving intelligence of the terminal and bringing convenience to the user.

Another device marking method provided by an embodiment of the invention may be used in a terminal, such as a smart phone, a tablet, a personal digital assistant (PDA). Fig. 5 illustrates the device marking method according to the exemplary embodiment of the invention. As shown, the method comprises the following steps.

In step 31, a marking request forwarded by a gateway device having the terminal bound therewith in advance is received.

The marking request requests the terminal to mark the target smart device in a device list currently displayed, and the device list contains information on at least one smart device added into a device list of a target device. The target device is the terminal or the gateway device. As long as it has been added to the target device, the smart device added to the target device may be online or powered on or may be offline or not powered on.

In this step, the terminal may receive the marking request forwarded by the gateway device having the terminal bound therewith in advance, according to the related art.

In step 32, the target smart device is marked in a device list currently displayed, according to the marking request.

In this step, the terminal may find the target smart device in the device list according to the device identification carried by the marking request, and further mark the target smart device in the device list according to any of the following manners.

In a first manner, the target smart device is marked in a different display manner.

Optionally, the terminal may display, in the device list, the target smart device in a first display manner and another smart device added to the target device other than the target smart device in a second display manner, according to the related art. The first display manner is different from the second display manner.

The first display manner may differ from the second display manner in terms of any of color, font, background color, text size and stroke thickness. The user may set the first display manner and the second display manner respectively. It is also possible for the terminal to randomly determine two different display manners, which correspond to the first display manner and the second display manner respectively.

For example, the first display manner may be set as a bold, red and "Song" font, and the second display manner may be set as a black and "regular script" font. Accordingly, when the target smart device is marked in the device list, it may be displayed in "Song", red and bold, and all other smart devices in the device list than the target smart devices may be displayed in "regular script" and black.

In a second manner, the target smart device is marked by adding a preset label.

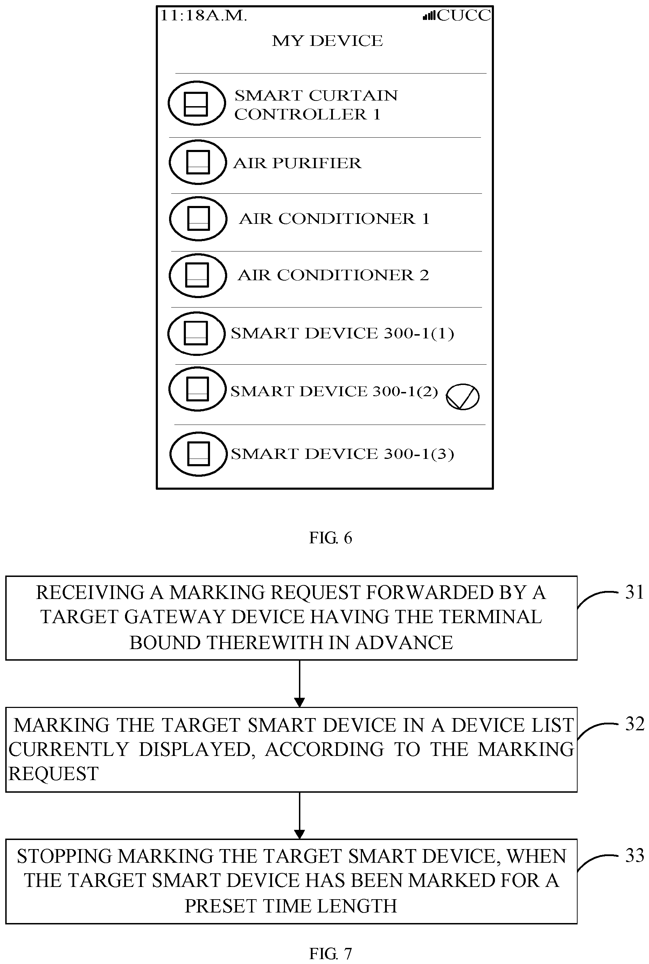

Optionally, the user may set the preset label. For example, the preset identifier may be set as a designated symbol such as a triangle or a circle or may be set as a label in the form of a check mark, as shown in Fig. 6.

Optionally, as shown in Fig. 7 which illustrates another device marking method based on the embodiment shown in Fig. 5, the method further comprises the following steps after step 32 is executed.

In step 33, marking of the target smart device is stopped, when the target smart device has been marked for a preset time length.

In this step, when the target smart device has been marked in the device list for the preset time length, marking of the target smart device is stopped, thereby avoiding the problem that a user cannot correlate a physical target smart device with its visual representation in the device list caused by marking a plurality of target smart devices in the device list after the user presses preset buttons on other target smart devices.

Optionally, marking of the target smart device may be stopped according to any of the following manners.

In a first manner, all smart devices in the device list are displayed in the same display manner.

The terminal may display all smart devices in the device list in the same display manner (for example, in a third display manner) according to the related art, instead of in different display manners.

Optionally, the third display manner may be the same as the first display manner or the second display manner, or may be different from both the first display manner and the second display manner. If the third display manner is the same as the first display manner or the second display manner, when the user triggers a preset physical button on a further target smart device, the terminal displays the further target smart device in the first display manner and displays other smart devices in the second display manner. Because the first display manner is different from the second display manner, the further target smart device can still be marked in the device list.

For example, formerly, a target smart device was marked in the device list in a bold, red and "Song" font, while all other smart devices in the device list than the target smart device were marked in a black and "regular script" font. When the target smart device has been marked for the preset time length, all smart devices in the device list may be displayed in the bold, red and "Song" font or in the black and "regular script" font.

When a preset physical button on a further target smart device is triggered, the terminal marks the further target smart device in the device list in the bold, red and "Song" font again and displays other smart devices in the black and "regular script" font.

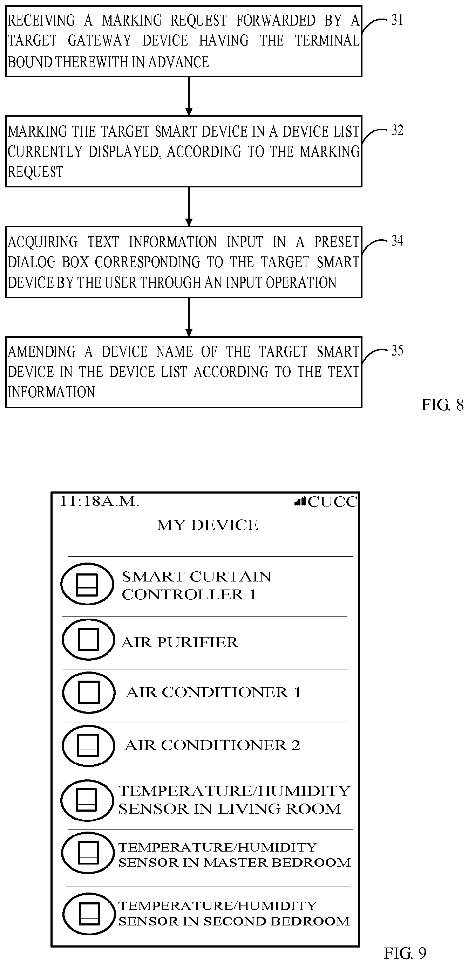

Optionally, to further improve user experience, another device marking method is provided as shown in Fig. 8. The device marking method shown in Fig. 8 is based on the embodiment shown in Fig. 5, and further comprises the following steps after step 32.

In step 34, text information input in a preset dialog box corresponding to the target smart device by the user through an input operation is acquired.

In this step, the user may input the text information in the preset dialog box through the input operation. The terminal acquires the text information according to the related art.

In step 35, a device name of the target smart device in the device list is amended according to the text information.

In this step, the terminal may amend the device name of the target smart device in the device list based on the text information according to the related art.

As shown in Fig. 9, based on the acquired text information, the terminal amends the device name of a target smart device in the device list from the original "smart device 300-1(1)" to "temperature/humidity sensor in living room", amends the device name of another target smart device from the original "smart device 300-1(2)" to "temperature/humidity sensor in master bedroom", and amends the device name of yet another target smart device from the original "smart device 300-1(3)" to "temperature/humidity sensor in second bedroom".

The above process facilitates later remote control of the corresponding smart device in the device list by using the terminal (for example, controlling only the temperature/humidity sensor in the living room), thereby further improving user experience.

In the above embodiment, the terminal can automatically mark the target smart device in the device list currently displayed according to the received marking request, thereby simplifying user operation. Moreover, the physical target smart device can be promptly correlated with its visual representation in the device list displayed on the terminal, thereby improving intelligence of the terminal and bringing convenience to the user.

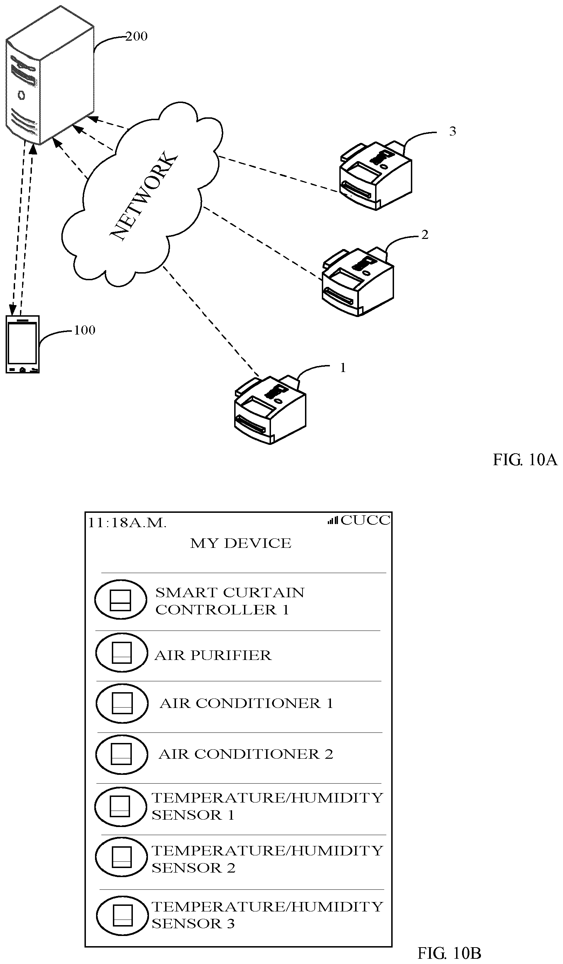

Fig. 10A is a schematic diagram of a scenario for device marking according to an exemplary embodiment. A target smart device 1, a target smart device 2 and a target smart device 3 all access a gateway device 200 via wireless connections. The gateway device 200 has a terminal 100 bound therewith in advance. Supposing the target smart devices are all smart temperature/humidity sensors, then a device list currently displayed on the terminal includes all smart device information in the device list of the accessed gateway device 200, shown in Fig. 10B.

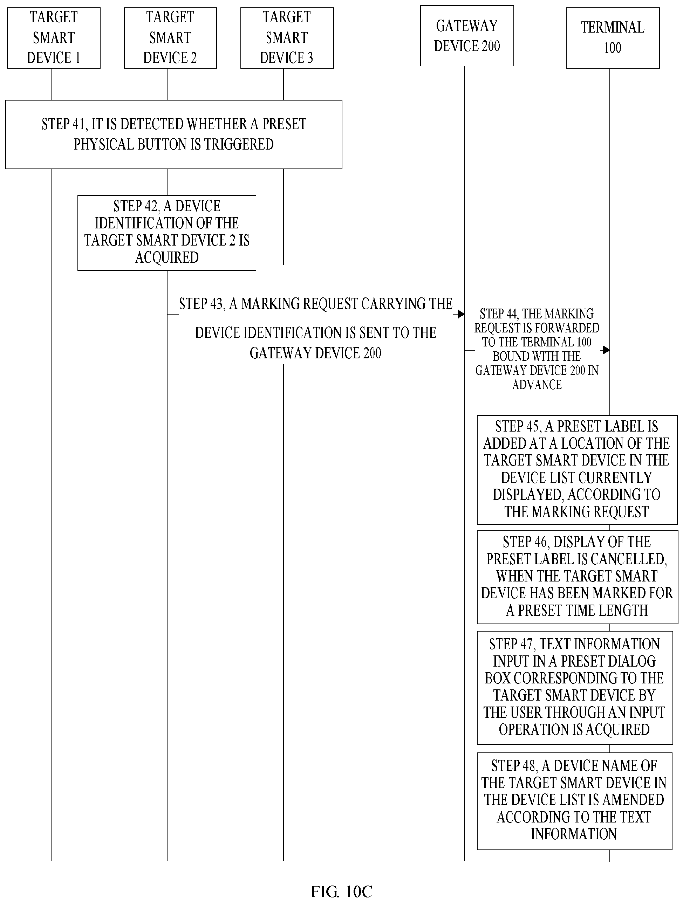

Fig. 10C illustrates a flowchart of another device marking method according to an exemplary embodiment, which is provided in combination with Figs. 10A and 10B. As shown, the method comprises the following steps.

In step 41, a target smart device detects whether a preset physical button is triggered.

In this step, it is supposed that the user selects the target smart device 2 in the living room as shown in Fig. 10A. That is, the preset physical button of the smart temperature/humidity sensor in the living room is triggered. The target smart devices each detects whether its preset physical button is triggered according to the prior art. In this case, the target smart device 2 in the living room detects that its preset physical button is triggered.

In step 42, when the preset physical button of the target smart device 2 is triggered, the target smart device 2 acquires a device identification of the target smart device 2.

In this step, the target smart device 2 acquires its own device identification.

In step 43, the target smart device 2 sends a marking request carrying the device identification to the gateway device 200.

In step 44, the gateway device 200 forwards the marking request to the terminal 100 bound with the gateway device 200 in advance.

In step 45, the terminal 100 adds a preset label at a location of the target smart device in the device list currently displayed, according to the marking request.

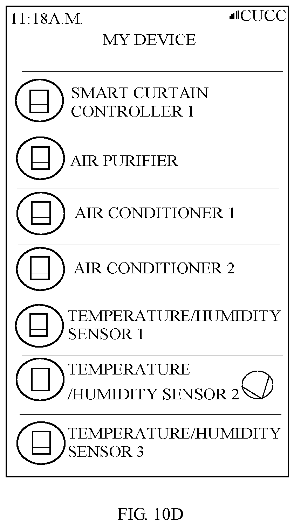

In this step, the terminal may find the target smart device 2 in the device list according to the device identification carried by the marking request, and add the preset label at the location of the target smart device 2, as shown in Fig. 10D.

In step 46, the terminal 100 cancels display of the preset label, when the target smart device has been marked for a preset time length.

In this step, when the target smart device has been marked for the preset time length, the terminal 100 may cancel display of the preset label according to the related art. Then, the device list is as shown in Fig. 10B.

In step 47, the terminal 100 acquires text information input in a preset dialog box corresponding to the target smart device by the user through an input operation.

In step 48, the terminal 100 amends a device name of the target smart device in the device list according to the text information.

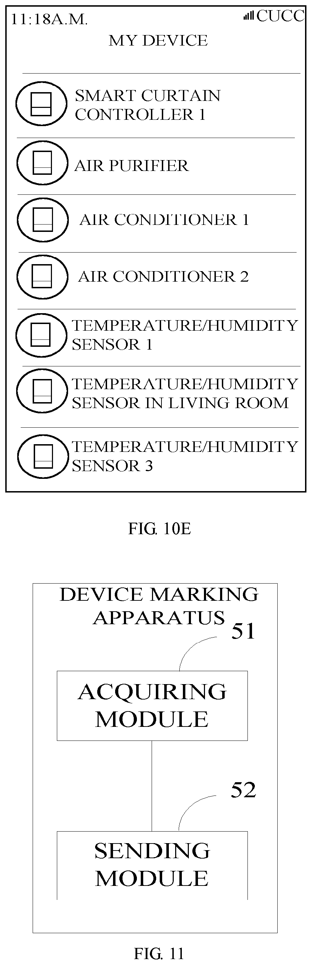

In this step, the terminal 100 may amend the device name of the target smart device into "temperature/humidity sensor in living room" according to the text information, as shown in Fig. 10E.

In the above embodiment, when there are a plurality of smart devices added to a target device during the same time period, a user may trigger a preset physical button on a target smart device. Then, the terminal automatically marks the target smart device in a device list currently displayed, so that the user can correlate the physical target smart device with its visual representation in the device list displayed by the terminal, thereby making it easier for the user to remotely control the corresponding smart device in the device list by using the terminal later, improving intelligence of the terminal and bringing convenience to the user.

Correspondingly to the aforesaid method embodiments, the present invention also provides apparatus embodiments.

Fig. 11 is a block diagram of a device marking apparatus according to an exemplary embodiment of the present invention. As shown, the apparatus comprises an acquiring module 51 and a sending module 52.

The acquiring module 51 is configured to acquire a device identification of the target smart device, when a preset physical button is triggered.

The sending module 52 is configured to send a marking request carrying the device identification to a gateway device to which the target smart device connects, so that the gateway device forwards the marking request to a terminal bound with the gateway device in advance.

The marking request requests the terminal to mark the target smart device in a device list currently displayed, and the device list contains information on at least one smart device added into a device list of a target device.

Optionally, the target device is the gateway device or the terminal.

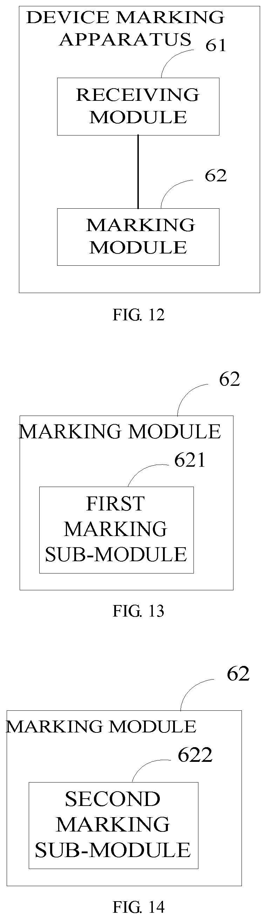

Fig. 12 is a block diagram of another device marking apparatus according to an exemplary embodiment of the present invention. As shown, the apparatus comprises a receiving module 61 and a marking module 62.

The receiving module 61 is configured to receive a marking request forwarded by a gateway device having a terminal bound therewith in advance.

The marking module 62 is configured to mark a target smart device in a device list currently displayed, according to the marking request.

The marking request requests the terminal to mark the target smart device in the device list and the marking request carries a device identification of the target smart device, and the device list contains information on at least one smart device added into a device list of a target device.

Fig. 13 is a block diagram of yet another device marking apparatus according to an exemplary embodiment of the present invention, which is based on the above-described embodiment shown in Fig. 12. As shown, the marking module 62 comprises a first marking sub-module 621.

The first marking sub-module 621 is configured to, in the device list currently displayed, display the target smart device in a first display manner and display another smart device added to the target device other than the target smart device in a second display manner, the first display manner being different from the second display manner.

Fig. 14 is a block diagram of still another device marking apparatus according to an exemplary embodiment of the present invention, which is based on the above-described embodiment shown in Fig. 12. As shown, the marking module 62 comprises a second marking sub-module 622.

The second marking sub-module 622 is configured to add a preset label at a location of the target smart device in the device list currently displayed.

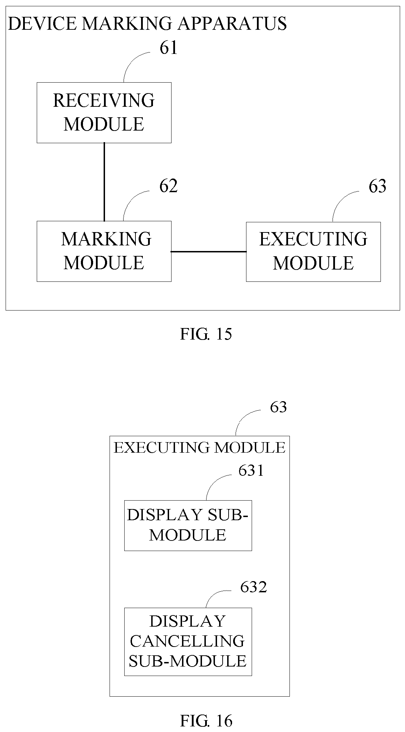

Fig. 15 is a block diagram of a further device marking apparatus according to an exemplary embodiment of the present invention, which is based on the above-described embodiment shown in Fig. 12. As shown, the apparatus further comprises an executing module 63.

The executing module 63 is configured to stop marking the target smart device, when the target smart device has been marked for a preset time length.

Fig. 16 is a block diagram of yet a further device marking apparatus according to an exemplary embodiment of the present invention, which is based on the above-described embodiment shown in Fig. 15. As shown, the executing module 63 comprises a displaying sub-module 631 or a display cancelling sub-module 632.

The displaying sub-module 631 is configured to display all smart devices in the device list in a third display manner.

The display cancelling sub-module 632 is configured to cancel display of the preset label.

As to apparatus embodiments, reference can be made to the method embodiments, since the apparatus embodiments substantially correspond to the method embodiments. The apparatus embodiments mentioned above are merely illustrative. The units described as separated components may or may not be physically separated, and components displayed as units may or may not be physical units, i.e., they may be located at the same place or distributed over a plurality of network units. The object of the solution of the present invention may be achieved by selecting some or all of the modules as practically required, as can be appreciated and implemented by those skilled in the art without making inventive efforts.

Correspondingly, the present invention further provides a device marking apparatus for use in a target smart device. The apparatus comprises: a processor; and a memory storing instructions executable by the processor. The processor is configured to: acquire a device identification of the target smart device, when a preset physical button is triggered; and send a marking request carrying the device identification to a gateway device to which the target smart device connects, so that the gateway device forwards the marking request to a terminal bound with the gateway device in advance, wherein the marking request requests the terminal to mark the target smart device in a device list currently displayed, and the device list contains information on at least one smart device added into a device list of a target device.

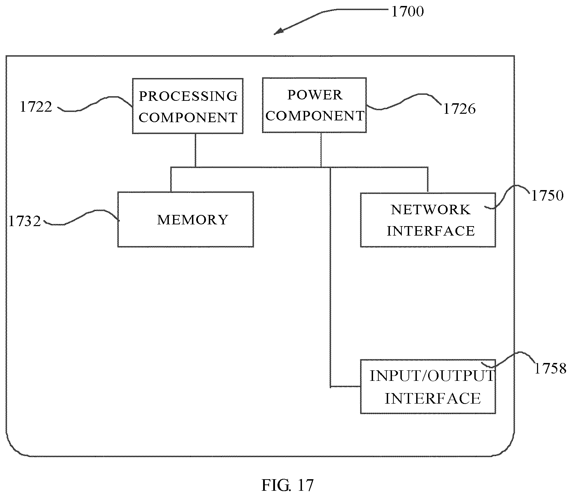

Fig. 17 is a schematic structural diagram of a device marking apparatus 1700 according to an exemplary embodiment of the present invention. For example, the apparatus 1700 may be provided as a server or a smart device. Referring to Fig. 17, the apparatus 1700 may comprise: a processing component 1722 which further comprises one or more processors, and memory resources represented by a memory 1732 for storing instructions executable by the processing component 1722, such as applications. The applications stored in the memory 1732 may comprise one or more modules, each corresponding to a set of instructions. In addition, the processing component 1722 is configured to execute instructions to perform the above-described device marking methods.

The apparatus 1700 may also include a power component 1726 configured to perform power management for the apparatus 1700, a wired or wireless network interfaces 1750 configured to connect the apparatus 1700 to a network, and an input/output interface 1758. The apparatus 1700 may operate an operating system stored in the memory 1732, such as Windows Server^{™}, Mac OS X^{™}, Unix^{™}, Linux^{™}, FreeBSD^{™} or the like.

Correspondingly, the present invention further provides a device marking apparatus for use in a terminal. The apparatus comprises: a processor; and a memory storing instructions executable by the processor. The processor is configured to: receive a marking request forwarded by a gateway device having the terminal bound therewith in advance; and mark a target smart device in a device list currently displayed, according to the marking request, wherein the marking request requests the terminal to mark the target smart device in the device list and the marking request carries a device identification of the target smart device, and the device list contains information on at least one smart device added into a device list of a target device.

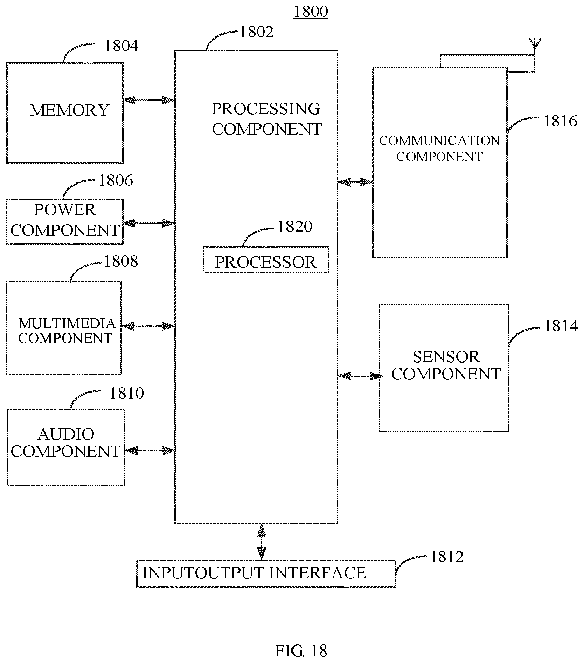

Fig. 18 is a schematic structural diagram of a device marking apparatus 1800 according to an exemplary embodiment of the present invention. For example, the apparatus 1800 may be a mobile phone, a computer, a digital broadcast terminal, a messaging device, a smart socket, a smart blood pressure meter, a gaming console, a tablet, a medical device, exercise equipment, a personal digital assistant or the like.

As shown in Fig. 18, the apparatus 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the apparatus 1800, such as the operations associated with display, telephone calls, data communications, camera operations, and recording operations. The processing component 1802 may include one or more processors 1820 to execute instructions to perform all or part of the steps in the above described methods. Moreover, the processing component 1802 may include one or more modules which facilitate the interaction between the processing component 1802 and other components. For instance, the processing component 1802 may include a multimedia module to facilitate the interaction between the multimedia component 1808 and the processing component 1802.

The memory 1804 is configured to store various types of data to support the operation of the apparatus 1800. Examples of such data include instructions for any applications or methods operated on the apparatus 1800, contact data, phonebook data, messages, pictures, video, etc. The memory 1804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1806 provides power to various components of the apparatus 1800. The power component 1806 may include a power management system, one or more power sources, and any other components associated with the generation, management, and distribution of power in the apparatus 1800.

The multimedia component 1808 includes a screen providing an output interface between the apparatus 1800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1808 includes a front camera and/or a rear camera. The front camera and the rear camera may receive an external multimedia datum while the apparatus 1800 is in an operation mode, such as a photographing mode or a video mode. Each of the front camera and the rear camera may be a fixed optical lens system or have focus and optical zoom capability.

The audio component 1810 is configured to output and/or input audio signals. For example, the audio component 1810 includes a microphone ("MIC") configured to receive an external audio signal when the apparatus 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the apparatus 1800. For instance, the sensor component 1814 may detect an open/closed status of the apparatus 1800, relative positioning of components, e.g., the display and the keypad, of the apparatus 1800, a change in position of the apparatus 1800 or a component of the apparatus 1800, a presence or absence of user contact with the apparatus 1800, an orientation or an acceleration/deceleration of the apparatus 1800, and a change in temperature of the apparatus 1800. The sensor component 1814 may include a proximity sensor configured to detect the presence of nearby objects without any physical contact. The sensor component 1814 may also include a light sensor, such as a CMOS or CCD image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the apparatus 1800 and other devices. The apparatus 1800 can access a wireless network based on a communication standard, such as WiFi, 2G, or 3G, or a combination thereof. In one embodiment, the communication component 1816 receives a broadcast signal or broadcast associated information from an external broadcast management system via a broadcast channel. In one embodiment, the communication component 1816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the apparatus 1800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods. In an embodiment, there is also provided a non-transitory computer readable storage medium including instructions, such as included in the memory 1804, executable by the processor 1820 in the apparatus 1800, for performing the above-described methods. For example, the non-transitory computer readable storage medium may be a ROM, a RAM, a CD-ROM, a magnetic tape, a floppy disc, an optical data storage device, and the like.

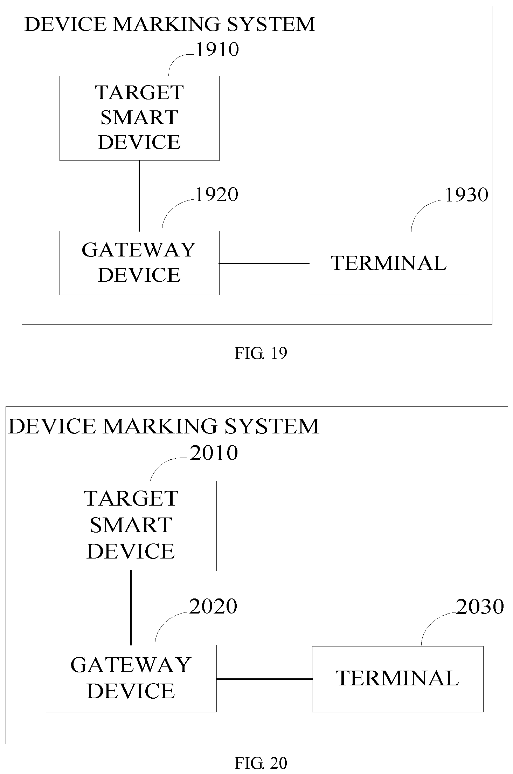

Fig. 19 is a block diagram of a device marking system according to an exemplary embodiment of the present invention. The system may comprise: a target smart device 1910, which is the device marking apparatus shown in Fig. 11; a gateway device 1920; and a terminal 1930, which is the device marking apparatus shown in any of Figs. 12 to 16.

Fig. 20 is a block diagram of another device marking system according to an exemplary embodiment of the present invention. The system may comprise: a target smart device 2010, which is the device marking apparatus shown in Fig. 17; a gateway device 2020; and a terminal 2030, which is the device marking apparatus shown in Fig. 18.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A device marking method for use in a terminal, the method comprising:
receiving (31) a marking request forwarded by a gateway device having the terminal bound therewith in advance, when a preset physical button is triggered at a target smart device in a case where the target smart device accesses the gateway device for a first time; and
marking (32) the target smart device in a device list currently displayed, according to the marking request,
wherein the marking request requests the terminal to mark the target smart device in the device list and the marking request carries a device identification of the target smart device, and the device list contains information of at least one smart device added into a device list of a target device, and
after marking the target smart device in the device list currently displayed, stopping (33) marking the target smart device, when the target smart device has been marked for a preset time length.

2. The method of claim 1, wherein marking the target smart device in the device list currently displayed comprises:
in the device list currently displayed, displaying the target smart device in a first display manner and displaying another smart device added to the target device other than the target smart device in a second display manner, the first display manner being different from the second display manner.

3. The method of claim 1, wherein marking the target smart device in the device list currently displayed comprises:
adding a preset label at a location of the target smart device in the device list currently displayed.

4. The method of claim 1, wherein stopping marking the target smart device comprises:
displaying all smart devices in the device list in a third display manner; or
cancelling display of the preset label.

5. A device marking apparatus for use in a terminal, the apparatus comprising:
a receiving module (61) configured to receive a marking request forwarded by a gateway device having the terminal bound therewith in advance, when a preset physical button is triggered at a target smart device in a case where the target smart device accesses the gateway device for a first time;
a marking module (62) configured to mark the target smart device in a device list currently displayed, according to the marking request,
wherein the marking request requests the terminal to mark the target smart device in the device list and the marking request carries a device identification of the target smart device, and the device list contains information of at least one smart device added into a device list of a target device; and
an executing module (63) configured to stop marking the target smart device, when the target smart device has been marked for a preset time length.

6. The apparatus of claim 5, wherein the marking module comprises:
a first marking sub-module (621) configured to, in the device list currently displayed, display the target smart device in a first display manner and display another smart device added to the target device other than the target smart device in a second display manner, the first display manner being different from the second display manner.

7. The apparatus of claim 5, wherein the marking module comprises:
a second marking sub-module (622) configured to add a preset label at a location of the target smart device in the device list currently displayed.

8. The apparatus of claim 5, wherein the executing module comprises:
a displaying sub-module (631) configured to display all smart devices in the device list in a third display manner; or
a display cancelling sub-module (632) configured to cancel display of the preset label.

9. A device marking apparatus for use in a terminal, the apparatus comprising:
a processor (1820); and
a memory storing (1804) instructions executable by the processor (1820),
wherein the processor (1820) is configured to perform the device marking method for use in a terminal according to any of claims 1 to 4.

10. A recording medium readable by a computer and having recorded thereon a computer program including instructions for executing the steps of a device marking method for use in a terminal according to any of claims 1 to 4.

## Patentansprüche

1. Gerätemarkierungsverfahren zur Verwendung in einem Endgerät, wobei das Verfahren umfasst:
Empfangen (31) einer Markierungsaufforderung, die von einem Gateway-Gerät weitergeleitet wird, mit dem das Endgerät im Voraus verbunden ist, wenn eine vorgegebene physische Taste an einem intelligenten Zielgerät ausgelöst wird, in einem Fall, in dem das intelligente Zielgerät zum ersten Mal auf das Gateway-Gerät zugreift; und
Markieren (32) des intelligenten Zielgeräts in einer aktuell angezeigten Geräteliste entsprechend der Markierungsanforderung,
wobei die Markierungsaufforderung das Endgerät auffordert, das intelligente Zielgerät in der Geräteliste zu markieren, und die Markierungsaufforderung eine Gerätekennung des intelligenten Zielgeräts enthält, und die Geräteliste Informationen zu mindestens einem intelligenten Gerät beinhaltet, die zu einer Geräteliste eines Zielgeräts hinzugefügt wurde, und
nach dem Markieren des intelligenten Zielgeräts in der aktuell angezeigten Geräteliste, Stoppen (33) der Markierung des intelligenten Zielgeräts, wenn das intelligente Zielgerät für eine vorgegebene Zeitspanne markiert worden ist.

2. Verfahren nach Anspruch 1, wobei das Markieren des intelligenten Zielgeräts in der aktuell angezeigten Geräteliste umfasst:
in der aktuell angezeigten Geräteliste, Anzeigen des intelligenten Zielgeräts auf eine erste Anzeigeart und Anzeigen eines anderen intelligenten Geräts, das zu dem Zielgerät hinzugefügt wurde und sich von dem intelligenten Zielgerät unterscheidet, auf eine zweite Anzeigeart, wobei die erste Anzeigeart sich von der zweiten Anzeigeart unterscheidet.

3. Verfahren nach Anspruch 1, wobei das Markieren des intelligenten Zielgeräts in der aktuell angezeigten Geräteliste umfasst:
Hinzufügen einer vorgegebenen Kennzeichnung an der Position des intelligenten Zielgeräts in der aktuell angezeigten Geräteliste.

4. Verfahren nach Anspruch 1, wobei das Stoppen der Markierung des intelligenten Zielgeräts umfasst:
Anzeigen sämtlicher intelligenter Geräte in der Geräteliste auf eine dritte Anzeigeart; oder
Abbrechen der Anzeige der vorgegebenen Kennzeichnung.

5. Gerätemarkierungsvorrichtung zur Verwendung in einem Endgerät, wobei die Vorrichtung aufweist:
ein Empfangsmodul (61), das dazu ausgebildet ist, eine Markierungsaufforderung zu empfangen, die von einem Gateway-Gerät weitergeleitet wird, mit dem das Endgerät im Voraus verbunden ist, wenn eine vorgegebene physische Taste an einem intelligenten Zielgerät ausgelöst wird, wenn das intelligente Zielgerät zum ersten Mal auf das Gateway-Gerät zugreift;
ein Markierungsmodul (62), das dazu ausgebildet ist, das intelligente Zielgerät in einer aktuell angezeigten Geräteliste entsprechend der Markierungsaufforderung zu markieren,
wobei die Markierungsaufforderung das Endgerät auffordert, das intelligente Zielgerät in der Geräteliste zu markieren, und die Markierungsaufforderung eine Gerätekennung des intelligenten Zielgeräts enthält, und die Geräteliste Informationen zu mindestens einem intelligenten Gerät beinhaltet, die zu einer Geräteliste eines Zielgeräts hinzugefügt wurde; und
ein Ausführungsmodul (63), das dazu ausgebildet ist, die Markierung des intelligenten Zielgeräts zu stoppen, wenn das intelligente Zielgerät für eine vorgegebene Zeitspanne markiert worden ist.

6. Vorrichtung nach Anspruch 5, wobei das Markierungsmodul aufweist:
ein erstes Markierungssubmodul (621), das dazu ausgebildet ist, in der aktuell angezeigten Geräteliste das intelligente Zielgerät auf eine erste Anzeigeart anzuzeigen und das andere intelligente Gerät, das zu dem Zielgerät hinzugefügt wurde und sich von dem intelligenten Zielgerät unterscheidet, auf eine zweite Anzeigeart anzuzeigen, wobei die erste Anzeigeart sich von der zweiten Anzeigeart unterscheidet.

7. Vorrichtung nach Anspruch 5, wobei das Markierungsmodul aufweist:
ein zweites Markierungssubmodul (622), das dazu ausgebildet ist, eine vorgegebene Kennzeichnung an der Position des intelligenten Zielgeräts in der aktuell angezeigten Geräteliste hinzuzufügen.

8. Vorrichtung nach Anspruch 5, wobei das Ausführungsmodul aufweist:
eine Anzeigesubmodul (631), das dazu ausgebildet ist, sämtliche intelligente Geräte in der Geräteliste auf eine dritte Anzeigeart anzuzeigen; oder
ein Anzeigeabbruchsubmodul (632), das dazu ausgebildet ist, die Anzeige der vorgegebenen Kennzeichnung abzubrechen.

9. Gerätemarkierungsvorrichtung zur Verwendung in einem Endgerät, wobei die Vorrichtung aufweist:
einen Prozessor (1820); und
einen Speicher (1804), auf dem von dem Prozessor (1820) ausführbare Anweisungen gespeichert sind,
wobei der Prozessor (1820) dazu ausgebildet ist, das Gerätemarkierungsverfahren zur Verwendung in einem Endgerät nach einem der Ansprüche 1 bis 4 durchzuführen.

10. Aufzeichnungsmedium, das von einem Computer lesbar ist und auf dem ein Computerprogramm aufzeichnet ist, das Anweisungen enthält, um die Schritte eines Gerätemarkierungsverfahrens zur Verwendung in einem Endgerät nach einem der Ansprüche 1 bis 4 auszuführen.

## Revendications

1. Procédé de marquage d'un dispositif pour une utilisation dans un terminal, le procédé comprenant :
la réception (31) d'une demande de marquage transmise par un dispositif de passerelle auquel le terminal est lié à l'avance, lorsqu'un bouton physique prédéfini est déclenché au niveau d'un dispositif intelligent cible dans le cas où le dispositif intelligent cible accède au dispositif de passerelle pour la première fois ; et
le marquage (32) du dispositif intelligent cible dans une liste de dispositifs actuellement affichée, selon la demande de marquage,
dans lequel la demande de marquage demande au terminal de marquer le dispositif intelligent cible dans la liste de dispositifs et la demande de marquage porte une identification de dispositif du dispositif intelligent cible, et la liste de dispositifs contient des informations sur au moins un dispositif intelligent ajouté à la liste de dispositifs d'un dispositif cible, et
après avoir marqué le dispositif intelligent cible dans la liste de dispositifs actuellement affichée, l'arrêt (33) du marquage du dispositif intelligent cible, lorsque le dispositif intelligent cible a été marqué pendant une durée prédéfinie.

2. Procédé selon la revendication 1, dans lequel le marquage du dispositif intelligent cible dans la liste des dispositifs actuellement affichée comprend :
dans la liste de dispositifs actuellement affichée, l'affichage du dispositif intelligent cible selon un premier mode d'affichage et l'affichage d'un autre dispositif intelligent ajouté au dispositif cible autre que le dispositif intelligent cible selon un deuxième mode d'affichage, le premier mode d'affichage étant différent du deuxième mode d'affichage.

3. Procédé selon la revendication 1, dans lequel le marquage du dispositif intelligent cible dans la liste des dispositifs actuellement affichée comprend :
l'ajout d'une étiquette prédéfinie au niveau d'un emplacement du dispositif intelligent cible dans la liste de dispositifs actuellement affichée.

4. Procédé selon la revendication 1, dans lequel l'arrêt du marquage du dispositif intelligent cible comprend : l'affichage de tous les dispositifs intelligents dans la liste de dispositifs selon un troisième mode d'affichage ; ou l'annulation de l'affichage de l'étiquette prédéfinie.

5. Appareil de marquage de dispositif pour une utilisation dans un terminal, l'appareil comprenant :
un module de réception (61) configuré pour recevoir une demande de marquage transmise par un dispositif de passerelle auquel le terminal est lié à l'avance, lorsqu'un bouton physique prédéfini est déclenché au niveau d'un dispositif intelligent cible dans le cas où le dispositif intelligent cible accède au dispositif de passerelle pour la première fois ;
un module de marquage (62) configuré pour marquer le dispositif intelligent cible dans une liste de dispositifs actuellement affichée, selon la demande de marquage,
dans lequel la demande de marquage demande au terminal de marquer le dispositif intelligent cible dans la liste de dispositifs et la demande de marquage porte une identification de dispositif du dispositif intelligent cible, et la liste de dispositifs contient des informations sur au moins un dispositif intelligent ajouté dans une liste de dispositifs d'un dispositif cible ; et
un module d'exécution (63) configuré pour arrêter le marquage du dispositif intelligent cible, lorsque le dispositif intelligent cible a été marqué pendant une durée prédéfinie.

6. Appareil selon la revendication 5, dans lequel le module de marquage comprend :
un premier sous-module de marquage (621) configuré pour, dans la liste de dispositifs actuellement affichée, afficher le dispositif intelligent cible selon un premier mode d'affichage et afficher un autre dispositif intelligent ajouté au dispositif cible autre que le dispositif intelligent cible selon un deuxième mode d'affichage, le premier mode d'affichage étant différent de la deuxième manière d'affichage.

7. Appareil selon la revendication 5, dans lequel le module de marquage comprend :
un second sous-module de marquage (622) configuré pour ajouter une étiquette prédéfinie au niveau d'un emplacement du dispositif intelligent cible dans la liste de dispositifs actuellement affichée.

8. Appareil selon la revendication 5, dans lequel le module d'exécution comprend :
un sous-module d'affichage (631) configuré pour afficher tous les dispositifs intelligents dans la liste de dispositifs selon un troisième mode d'affichage ; ou
un sous-module d'annulation d'affichage (632) configuré pour annuler l'affichage de l'étiquette prédéfinie.

9. Appareil de marquage de dispositif pour une utilisation dans un terminal, l'appareil comprenant :
un processeur (1820) ; et
une mémoire stockant (1804) des instructions exécutables par le processeur (1820),
dans lequel le processeur (1820) est configuré pour effectuer le procédé de marquage de dispositif pour une utilisation dans un terminal selon l'une quelconque des revendications 1 à 4.

10. Support d'enregistrement lisible par un ordinateur et sur lequel est enregistré un programme informatique comportant des instructions permettant d'exécuter les étapes d'un procédé de marquage d'un dispositif pour une utilisation dans un terminal selon l'une quelconque des revendications 1 à 4.
